# EUROPÄISCHE PATENTSCHRIFT

(11) **EP 4 162 330 B1**
(45) Veröffentlichungstag und Bekanntmachung des Hinweises auf die Patenterteilung: **01.01.2025**
(21) Anmeldenummer: 21728532.9
(22) Anmeldetag: 25.05.2021
(51) Int. Cl.: G05B 19/042, G05B 9/02, B25J 9/16, G05B 19/409

(54) **SICHERHEITSSTEUERUNGSSYSTEM UND VERFAHREN ZUM AUSFÜHREN EINER SICHERHEITSFUNKTION**
SAFETY CONTROL SYSTEM AND METHOD FOR EXECUTING A SAFETY FUNCTION
SYSTÈME DE COMMANDE DE SÉCURITÉ ET PROCÉDÉ D'EXÉCUTION D'UNE FONCTION DE SÉCURITÉ

(30) Priorität: 08.06.2020 DE 102020115104
(43) Veröffentlichungstag der Anmeldung: 12.04.2023
(73) Patentinhaber: KUKA Deutschland GmbH, 86165 Augsburg (DE)
(72) Erfinder: KOGAN, Yevgen, 86152 Augsburg (DE)
(74) Vertreter: Oelke, Jochen
(86) Internationale Anmeldenummer: PCT/EP2021/063824
(87) Internationale Veröffentlichungsnummer: WO 2021/249757

(56) Entgegenhaltungen:
- EP-A1- 1 716 982
- EP-A1- 2 098 926
- EP-A1- 3 418 825
- EP-B1- 2 098 926
- WO-A1-2020/087098

## Beschreibung

Die vorliegende Erfindung betrifft ein Sicherheitssteuerungssystem und ein Verfahren zum Ausführen einer Sicherheitsfunktion für zumindest eine Automationsanlagenkomponente, wobei das Sicherheitssteuerungssystem eine Sicherheitssteuerung und ein oder mehrere Sicherheitseingabemittel aufweist, und wobei an jedem Sicherheitseingabemittel eine Anzeigevorrichtung angeordnet ist und die Anzeigevorrichtung dazu eingerichtet ist einen Wirkbereich der Sicherheitsfunktion in Abhängigkeit von einer vorgegebenen Sicherheitskonfiguration der Sicherheitssteuerung zu visualisieren, wenn die Automationsanlagenkomponente mit der Sicherheitssteuerung verbunden ist.

In industriellen Automationsanlagen ist es gemäß den geltenden Sicherheitsrichtlinien, z.B. der DIN EN ISO 10218-22012-06 gefordert, dass jede (Teil-)Komponente, die eine gefährdende Aktion durchführen kann, eine Sicherheitsfunktion, z.B. eine Not-Halt-Funktion aufweisen muss. Dafür werden bisher, ausgehend von den Normen, entsprechende Sicherheitstaster, in der Regel rote Not-Halt-Taster mit gelbem Gehäuse als Hintergrund verwendet. In einigen Ausführungen kann dieser Not-Halt-Taster bzw. sein Gehäuse auch aktiv beleuchtet sein, um diesen in schlechten Lichtverhältnissen innerhalb der Anlage besser sichtbar zu machen. Bei größeren Anlagen ist es bekannt für unterschiedliche Wirkbereiche einer Not-Halt-Funktion unterschiedliche Not-Halt-Taster zu verwenden, um eine entsprechende Not-Halt-Funktion nur für den betroffenen Wirkbereich zu aktivieren. Damit soll gewährleistet werden, dass bei Betätigung eines Not-Halt-Tasters nicht stets die gesamte Anlage in einen Not-Halt-Zustand versetzt wird. Zur Einhaltung der oben genannten Norm wurden dazu bisher die Not-Halt-Taster durch Beschriftungen oder Markierungen gekennzeichnet, um den Wirkbereich der ausgelösten Not-Halt-Funktion kenntlich zu machen.

Dieses Vorgehen ist unproblematisch solange eine Automationsanlage bereits in Betrieb genommen wurde und im Betrieb unveränderlich ist, also eine feste Konfiguration aufweist. Bei der Inbetriebnahme selbst sind allerdings meist nur einige Teile der Automationsanlage funktionsfähig, während andere gerade im Aufbau befindlich und somit inaktiv sind. Durch Hinzunehmen von Anlagenkomponenten, wie z.B. einzelner Teile einer Arbeitszelle, wie Manipulatoren oder ähnliches ändert sich die Konfiguration der Anlage, ohne dabei aber automatisch Einfluss auf den Wirkbereich einer Sicherheitsfunktion zu nehmen. Dies stellt für den Inbetriebnehmer der Anlage ein erhöhtes Sicherheits- und Unfallrisiko dar.

In ähnlicher Weise gilt dies, wenn eine ursprünglich bereits in Betrieb genommene Automationsanlage manuell oder automatisch umkonfiguriert werden muss, um z.B. auf sich ändernde Produktionsanforderungen Rücksicht zu nehmen. Beispielhaft wäre hier die Verwendung von flexibel einsetzbaren Robotersystemen, die modular in die bestehende Fertigungsanlage integriert, umkonfiguriert oder herausgenommen werden können. Dies gilt insbesondere im Falle der neuartig in der Produktion zum Einsatz kommenden kollaborierenden Roboter bzw. Cobots. Diese werden flexibel, je nach Anwendung, in den Fertigungsprozess integriert und unterliegen damit ebenfalls den im Prozess gültigen Sicherheitsnormen.

Ebenso können koordinierte Roboterverbünde aus mehreren Robotern zur Laufzeit je nach Arbeitsschritt verändert werden. So z.B. können in einer Arbeitszelle drei Roboter R₁, R₂ und R₃ vorhanden sein, wobei R₂ abwechselnd mit R₁ oder R₃ koordiniert bewegt wird. Der Roboterverbund (R₁ + R₂) und der Roboterverbund (R₂ + R₃) stellen dabei zu unterschiedlichen Zeitpunkten unterschiedliche Wirkbereiche einer Sicherheitsfunktion einer Sicherheitssteuerung dar. Ein weiteres Beispiel für diese Roboterverbünde wäre der Stationswechsel einer mobilen Roboterplattform in einem matrixartigen Produktionskonzept. Hierbei operiert die mobile Roboterplattform meist autonom in der Fertigungsanlage und bildet zusammen mit einer Bearbeitungsstation, die selbst einen oder mehrere Bearbeitungsroboter aufweisen kann einen temporären Roboterverbund während des Bearbeitungsvorgangs in der Station.

In allen genannten Fällen muss eine ständige Konformität der zu sichernden Anlage mit den geltenden Normen gewährleistet sein. Diese wird allerdings durch eine starre Beschriftung oder Markierung der Sicherheitseingabemittel nicht garantiert.

Die WO 2020/087098 A1 offenbart ein Verfahren zum Betreiben eines Maschinensteuerungssystems, wobei dazu ein mobiles, von einer Bedienperson tragbares Handbediengerät mit Nothalt-Betätigungselement vorgesehen ist. Die Maschinensteuerung und das Handbediengerät sind dazu eingerichtet, ein Abbild des Maschinensteuerungssystems sowie den oder die Wirkungsbereiche des zumindest einen Nothalt-Betätigungselements mittels eines Displays abzubilden.

Die EP 3 418 825 A1 offenbart ein System mit Sicherheitssteuerung, die die Stromzufuhr zu einer Automationsanlage unterbrechen oder diese durch Eingabe eines Werkers in einen sicheren Zustand überführen kann. Das System beinhaltet ebenfalls einen durch den Werker bedienbaren Nothaltschalter sowie eine damit verbundene Benutzerschnittstelle.

Die EP 2 098 926 A1 offenbart ein Verfahren zum Programmieren oder Konfigurieren einer Sicherheitssteuerung und einem Anschlussmodul, welches einen Eingang für einen Sensor bzw. einen Ausgang für einen Aktor aufweist, wobei über eine grafische Benutzeroberfläche Sensoren bzw. Aktoren ausgewählt und Eingängen bzw. Ausgängen des Anschlussmoduls zugeordnet werden.

Die EP 1 716 982 A1 offenbart einen Industrieroboter mit Steuereinheit und einem Eingabemittel, wobei die Steuereinheit und das Eingabemittel zum Programmbetrieb des Industrieroboters kabellos kommunizieren können. Zur Kopplung der Steuereinheit und des Eingabemittels werden diese in unmittelbarer Nähe zueinander mittels einer temporäre Hilfsverbindung verbunden und gekoppelt.

Aufgabe der vorliegenden Erfindung ist es ein Sicherheitssteuerungssystem bereitzustellen und ein Verfahren anzugeben, um die Sicherheit des Anlagenbetreibers bzw. Inbetriebnehmers beim Auslösen einer Sicherheitsfunktion innerhalb einer Automationsanlage zu verbessern.

Diese Aufgabe wird durch ein Sicherheitssteuerungssystem mit den Merkmalen des Anspruchs 1 und einem Verfahren mit den Merkmalen des Anspruchs 3 gelöst. Weitere Vorteile und Merkmale ergeben sich aus den Unteransprüchen.

Die Aufgabe wird gelöst durch ein Sicherheitssteuerungssystem zum Ausführen einer Sicherheitsfunktion für zumindest eine Automationsanlagenkomponente, wobei das Sicherheitssteuerungssystem eine Sicherheitssteuerung und ein oder mehrere Sicherheitseingabemittel aufweist, und wobei das Ausführen der Sicherheitsfunktion durch Betätigung eines der Sicherheitseingabemittel ausgelöst wird. An jedem der Sicherheitseingabemittel ist dabei eine Anzeigevorrichtung angeordnet, die weiterhin dazu eingerichtet ist, den Wirkbereich der Sicherheitsfunktion in Abhängigkeit von einer vorgegebenen Sicherheitskonfiguration der Sicherheitssteuerung zu visualisieren, wenn die Automationsanlagenkomponente mit der Sicherheitssteuerung verbunden ist.

Eine Sicherheitssteuerung im Sinne der Erfindung kann als eine eigenständige Einheit ausgestaltet sein oder als Teil einer Automatisierungssteuerung z.B. als Teilkomponente der Automationsanlage oder auch als übergeordnete Anlagensteuerung. Im Sinne der Erfindung weist die Sicherheitssteuerung bevorzugt eine Prozessoreinheit sowie Signaleingänge und Signalausgänge auf. Mittels dieser Signaleingänge und Signalausgänge, die vorzugsweise in sicherer Technik ausgeführt sein können, kommuniziert die Prozessoreinheit mit den Automatisierungsanlagenkomponenten und Sicherheitseingabemitteln, die mit der Sicherheitssteuerung verbunden sind.

Als Automationsanlage wird eine Fertigungsanlage verstanden, wie sie aus der industriellen Praxis bekannt ist. Eine Automationsanlage kann aus einem oder mehreren, zumindest zum Teil automatisch arbeitenden Automationsanlagenkomponenten, z.B. Manipulatoren, insbesondere Industrierobotern, oder anderen Handhabungseinheiten, wie z.B. Fördereinrichtungen, Prozessstationen usw. bestehen. Miteinander kooperierende Automationsanlagenkomponenten können dabei zumindest temporär einen Verbund bilden, wobei der Verbund gemäß eines Anlagen- bzw. Applikationsprogramms eine gemeinsame Aufgabe durchführt.

Ein Sicherheitseingabemittel kann ein, vorzugsweise in sicherer Technik ausgestalteter Sicherheitstaster, z.B. ein Not-Halt-Taster sein, der an einem sicheren Eingang der Sicherheitssteuerung angeschlossen ist. Bei Betätigung des Sicherheitseingabemittels wird ein sicherer Eingang der Sicherheitssteuerung geschalten und daraufhin durch die Sicherheitssteuerung eine Sicherheitsfunktion ausgelöst. In einer Automationsanlage können ein oder mehrere in der Anlage verteilte Sicherheitseingabemittel verwendet werden, die jeweils durch den Anlagenbetreiber betätigt werden können und jeweils einzeln die zugeordnete Sicherheitsfunktion auslösen. Das Verteilen mehrerer solcher Sicherheitseingabemittel innerhalb der Automationsanlage hat den Vorteil, dass die zu Grunde liegende Sicherheitsfunktion damit an mehreren Stellen ausgelöst werden kann. So muss der Anlagenbetreiber sich nicht erst zum Installationsort des einzigen Sicherheitseingabemittels zurückbegeben, um im Störfall reagieren zu können, sondern kann die Sicherheitsfunktion von einem beliebigen Ort in der Automationsanlage auslösen, sofern dort ein Sicherheitseingabemittel angebracht ist. Wichtig ist für den Inbetriebnehmer vor Ort zu erkennen, welche Automationsanlagenkomponente durch die Aktivierung des in dessen Reichweite befindlichen Sicherheitseingabemittels beeinflusst wird, mit anderen Worten, bis wohin sich also der Wirkbereich der Sicherheitsfunktion des Sicherheitseingabemittels erstreckt.

Eine Sicherheitsfunktion im Sinne der Erfindung stellt eine vorgegebene Bewegungsreaktion der Automationsanlagenkomponente dar, die durch das Signal der Sicherheitssteuerung direkt, oder durch eine durch das Signal beeinflusste Bewegungssteuerung ausgelöst wird. Eine solche Bewegungsreaktion kann z.B. das vollständige Stillsetzen oder nur eine Bewegungsgeschwindigkeitsreduzierung der Automationsanlagenkomponente auf eine sichere Geschwindigkeit sein, um das Risiko einer Verletzung des Anlagenbetreibers zu minimieren.

Die durch einen Not-Halt-Taster in der Regel ausgelöste Sicherheitsfunktion eines Manipulators, insbesondere eines Industrieroboters, ist die Not-Halt-Funktion. Bei dieser erfolgt als Bewegungsreaktion ein möglichst schnelles, vollständiges Stillsetzen der betroffenen Automationsanlagenkomponente. Der Not-Halt kann dabei beispielsweise mittels der Sicherheitssteuerung durch die unmittelbare Stromabschaltung zu den Antrieben und das gleichzeitige Einfallenlassen der mechanischen Bremsen der Automationsanlagenkomponente erzeugt werden, dem sogenannten "Stopp Kategorie 0". In einer weiteren Alternative kann die Not-Halt-Funktion das Stillsetzen des durch die Sicherheitsfunktion betroffenen Manipulators durch die Bewegungssteuerung mittels elektrischer und/oder mechanischer Bremsen nicht-bahntreu ("Stopp Kategorie 1") oder bahntreu erfolgen ("Stopp Kategorie 2").

Der Wirkbereich der Sicherheitsfunktion ist im Sinne der Erfindung die zum Auslösezeitpunkt durch das Sicherheitseingabemittel von der Sicherheitsfunktion beeinflusste Automationsanlagenkomponente. Der Wirkbereich wird durch eine Sicherheitskonfiguration der Sicherheitssteuerung vorgegeben und kann sich während der Inbetriebnahme oder bei einer Umkonfiguration einer Automationsanlage oder während dessen Betrieb ändern.

Die Sicherheitskonfiguration im Sinne der Erfindung ist eine durch den Anlagenbetreiber oder Inbetriebnehmer vorgegebene Gruppierung von Automationsanlagenkomponenten, die insbesondere zeitweise oder in Abhängigkeit von einem Programm- oder Applikationsablauf miteinander zusammenwirken. Die Sicherheitskonfiguration gibt damit an, welche Automationsanlagenkomponenten zu einem bestimmten Zeitpunkt im Programmablauf in einem Wirkbereich einer Sicherheitsfunktion liegen.

Die Anzeigevorrichtung ist eine an dem Sicherheitseingabemittel angeordnete Einheit zur Visualisierung des aktuellen Wirkbereichs der Sicherheitsfunktion in Abhängigkeit einer vorgegebenen Sicherheitskonfiguration der Sicherheitssteuerung. Die Anzeigevorrichtung kann in einer Ausführungsform integrales Teilelement des Sicherheitseingabemittels oder in einer weiteren Ausführungsform in der unmittelbaren Nähe des Sicherheitseingabemittels angeordnet sein. Die Visualisierung kann entweder alleine durch die Anzeigevorrichtung erfolgen oder in Zusammenwirken mit weiteren Mitteln.

In einer vorteilhaften Ausführung der vorliegenden Erfindung umfassen die Automationsanlagenkomponenten lokale Sicherheitssteuerungen, wobei die lokalen Sicherheitssteuerungen Teilelemente der Sicherheitssteuerung des Sicherheitssteuerungssystems darstellen können. Dies ist insbesondere dann bevorzugt, wenn die Automationsanlagenkomponenten zu einem bestimmten Zeitpunkt mit der Sicherheitssteuerung des Sicherheitssteuerungssystems verbunden vorliegen. In diesem Zusammenhang kann die vorgeschlagene Sicherheitssteuerung als zentrale Sicherheitssteuerung fungieren, wobei die zentrale Sicherheitssteuerung mit den lokalen Sicherheitssteuerungen der Automationsanlagenkomponenten verbunden vorliegt. Wird eine lokale Sicherheitssteuerung einer Automationsanlagenkomponente aus dem Netzwerk der zentralen und lokalen Sicherheitssteuerungen entfernt, so wirkt die entfernte lokale Sicherheitssteuerung nicht länger im Netzwerk der zentralen und verbleibenden lokalen Sicherheitssteuerungen. Die entfernte lokale Sicherheitssteuerung ist aber weiterhin in der Lage, die noch funktionsfähige Automationsanlagenkomponente, mit der sie verbunden ist, zu beeinflussen. Beispielsweise kann die entfernte lokale Sicherheitssteuerung die Automationsanlagenkomponente, für die sie zuständig ist, stillsetzen.

Wenn eine Automationsanlagenkomponente eine lokale Sicherheitssteuerung aufweist, kann die lokale Sicherheitssteuerung ein Sicherheitseingabemittel umfassen, wobei dieses an der lokalen Sicherheitssteuerung vorhandene Sicherheitseingabemittel ein Sicherheitseingabemittel des vorgeschlagenen Sicherheitssteuerungssystems sein kann. Dies ist im Sinne der Erfindung insbesondere dann bevorzugt, wenn die entsprechende lokale Sicherheitssteuerung zu einem bestimmten Zeitpunkt mit der Sicherheitssteuerung des Sicherheitssteuerungssystems verbunden ist. Ein solches an der lokalen Sicherheitssteuerung vorgesehenes Sicherheitseingabemittel kann im Sinne der Erfindung bevorzugt auch als lokales Sicherheitseingabemittel bezeichnet werden.

In einer nicht erfindungsgemäßen Ausführung kann die Anzeigevorrichtung als ein Bildschirm ausgebildet sein, der dazu eingerichtet ist den Wirkbereich der Sicherheitsfunktion, durch Anzeige einer graphischen Darstellung der mit der Sicherheitssteuerung verbundenen Automationsanlagenkomponente zu visualisieren. Der Bildschirm kann dabei bevorzugt als ein Touch-Display oder E-Ink Bildschirm ausgestaltet sein, auf dem sich die graphische Darstellung der Automationsanlagenkomponente visualisieren lässt. Die graphische Darstellung der mit der Sicherheitssteuerung verbundenen Automationsanlagenkomponente kann eine 2D- oder 3D-Repräsentation der Anlage z.B. eine skizzenhafte Zeichnung, ein CAD-Modell oder ein zuvor von der Automationsanlagenkomponente aufgenommenes Bild sein. Im Falle des Touch-Displays kann die Anzeige sogar interaktiv beeinflusst werden, z.B. je nach Bedarf die Größe der angezeigten Automationsanlagenkomponente verkleinert oder vergrößert werden oder gegebenenfalls auch Meldungen der Sicherheitssteuerung angezeigt bzw. durch den Anlagenbetreiber bestätigt werden.

Die Anzeigevorrichtung in der vorliegende Erfindung ist ein farblich veränderbares erstes Signalmittel. Das Signalmittel kann ein leuchtaktives Leuchtmittel oder ein leuchtpassives Anzeigemittel sein. Das leuchtaktive Leuchtmittel kann weiter ein oder mehrere Glühlampen, Leuchtdioden oder Leuchtflächen umfassen. Die Verwendung von Leuchtdioden stellt eine kostengünstige und einfach an das Sicherheitseingabemittel bzw. in dessen Taster, Gehäuse oder Halterung anbringbare Möglichkeit der Visualisierung dar. Leuchtflächen bieten aufgrund ihrer größeren Strahlwirkung Vorteile gegenüber Leuchtdioden, da sie leichter erkannt werden können. Ein leuchtpassives Anzeigemittel kann eine farbveränderliche, insbesondere schaltbare Anzeige sein, deren Zustand sich in der visuellen Darstellung mindestens zweier Farben unterscheidet, beispielsweise ein E-Ink Bildschirm. Die farbliche Veränderbarkeit der Signalmittel bietet dem Anlagenbetreiber die Möglichkeit, das Sicherheitseingabemittel von einem farblich anders markierten Sicherheitseingabemittel einer weiteren Sicherheitssteuerung in einfacher Weise zu unterscheiden.

Der Automationsanlagenkomponente sind ein oder mehrere farblich veränderbare zweite Signalmittel zugeordnet. Die zweiten Signalmittel können dabei wie die ersten Signalmittel leuchtaktive Leuchtmittel oder leuchtpassive Anzeigemittel sein. Die leuchtaktiven Leuchtmittel können weiter ein oder mehreren Glühlampen, Leuchtdioden oder Leuchtflächen umfassen. Im Sinne der Erfindung besonders bevorzugt ist die Verwendung von Leuchtmitteln, die bereits zu anderem Zwecke an Robotern vorgesehen sind, wie z.B. Leuchtringe an bzw. in der Roboterstruktur oder Signalleuchten an mobilen Roboterplattformen. Leuchtpassive Anzeigemittel können wieder farbveränderliche, insbesondere schaltbare Anzeigen sein, deren Zustand sich in der visuellen Darstellung mindestens zweier Farben unterscheidet, beispielsweise ein E-Ink Bildschirme. Weiter können leuchtpassive Anzeigemittel auch Lichtreflektoren, wie z.B. Spiegel oder Prismen sein. In analoger Weise, wie bei den ersten Signalmitteln, bietet die farbliche Veränderbarkeit der zweiten Signalmittel die Möglichkeit die Automationsanlagenkomponente von farblich anders markierten Automationsanlagenkomponenten zu unterscheiden. Die Verwendung von Lichtreflektoren ermöglicht es Projektoren an geeigneter Stelle in der Automationsanlage anzubringen, welche die Lichtreflektoren mit Licht der gewünschten Farbe anstrahlen. Dies bietet den Vorteil, dass keine zusätzlichen leuchtaktiven Leuchtmittel an den Automationsanlagenkomponenten angebracht werden müssen, sondern diese passiv beleuchtet werden können.

Das erste und das ein oder mehrere zweite Signalmittel visualisieren den Wirkbereich der Sicherheitsfunktion dadurch, dass das erste Signalmittel und das ein oder mehrere zweite Signalmittel farblich übereinstimmen. Diese farbliche Übereinstimmung ermöglicht es einem Anlagenbetreiber besonders einfach eine Übereinstimmung zwischen dem zu verwendenden Sicherheitseingabemittel und der farblich identisch markiertem Automationsanlagenkomponente herzustellen, um im Notfall den richtigen Teil der Anlage durch eine Sicherheitsfunktion zu beeinflussen, z.B. vollständig stillzusetzen.

Ein weiterer Aspekt der Erfindung betrifft ein Verfahren zum Ausführen einer Sicherheitsfunktion für zumindest eine Automationsanlagenkomponente mittels einer Sicherheitssteuerung und ein oder mehrere Sicherheitseingabemittel, wobei an dem Sicherheitseingabemittel eine Anzeigevorrichtung angeordnet ist. Das Verfahren weist die Schritte auf, wonach eine Sicherheitskonfiguration der Sicherheitssteuerung vorgegeben und diejenige Automationsanlagenkomponente ermittelt wird, die mit der Sicherheitssteuerung verbunden ist. Weiter weist das Verfahren den Schritt auf, dass der Wirkbereich der Sicherheitsfunktion in Abhängigkeit von der vorgegebenen Sicherheitskonfiguration auf der oder durch eine Anzeigevorrichtung des Sicherheitseingabemittels visualisiert wird. Das Ausführen der Sicherheitsfunktion wird durch Betätigung eines der Sicherheitseingabemittel ausgelöst.

Die Vorgabe der Sicherheitskonfiguration der Sicherheitssteuerung kann durch den Anlagenbetreiber oder den Inbetriebnehmer erfolgen. Mittels der Sicherheitskonfiguration kann in der Sicherheitssteuerung hinterlegt werden, welche der Automationsanlagenkomponenten zu einem bestimmten Zeitpunkt im Programmablauf in einem Wirkbereich einer Sicherheitsfunktion liegen bzw. von dieser beeinflusst werden.

Das Ermitteln der Automationsanlagenkomponente, die mit der Sicherheitssteuerung verbunden ist, kann entweder durch eine eigenständige Prozessoreinheit der Sicherheitssteuerung, eine Teileinheit einer Automatisierungssteuerung oder eine übergeordnete Anlagensteuerung erfolgen, wobei mittels einer Datenverbindung, insbesondere in sicherer Technik, mit den Teilen der Automationsanlage, insbesondere deren Komponenten deren Anwesenheit überprüft wird. Dazu können z.B. Datenpakete einmal oder wiederholt, vorzugsweise periodisch durch die Sicherheitssteuerung an die Automationsanlagenkomponente gesendet werden und bei erfolgter Antwort das Vorhandensein der antwortenden Automationsanlagenkomponente bestätigt werden. Abhängig vom Ergebnis des Schrittes des Ermittelns der mit der Sicherheitssteuerung verbundenen Automationsanlagenkomponente und in Abhängigkeit von der vorgegebenen Sicherheitskonfiguration der Sicherheitssteuerung wird dann im Schritt des Visualisierens der aktuelle, insbesondere sicherheitsrelevante Wirkbereich der Sicherheitsfunktion mittels der Anzeigevorrichtung visualisiert.

In einer nicht erfindungsgemäßen Ausführung kann die Anzeigevorrichtung ein Bildschirm, insbesondere ein Touch-Display oder E-Ink Bildschirm sein. In dieser Ausführungsform erfolgt die Visualisierung des Wirkbereichs der Sicherheitsfunktion, durch Anzeige einer graphischen Darstellung, z.B. als ein Bild der mit der Sicherheitssteuerung verbundenen Automationsanlagenkomponente auf dem Bildschirm. Diese Darstellung ermöglich es dem Anlagenbetreiber beim ersten Blick auf den Bildschirm bereits den sicherheitsrelevanten Wirkbereich in der Automationsanlage zu erfassen.

In einer Ausführung der vorliegenden Erfindung kann die Anzeigevorrichtung ein farblich veränderbares erstes Signalmittel sein. Das erste Signalmittel kann dabei ein leuchtaktives Leuchtmittel sein, das insbesondere ein oder mehrere Glühlampen, Leuchtdioden oder Leuchtflächen umfasst. In einer alternativen oder ergänzenden Ausführung kann das erste Signalmittel ein leuchtpassives Anzeigemittel sein, das eine farbveränderliche, insbesondere schaltbare Anzeige umfasst. Weiterhin können der Automationsanlagenkomponente ein oder mehrere farblich veränderbare zweite Signalmittel zugeordnet sein. Die zweiten Signalmittel können dabei leuchtaktive Leuchtmittel sein, die insbesondere ein oder mehrere Glühlampen, Leuchtdioden, Leuchtflächen umfassen. In einer alternativen oder ergänzenden Ausführung können die zweiten Signalmittel auch leuchtpassive Anzeigemittel sein, die farbveränderliche, insbesondere schaltbare Anzeigen umfassen, oder Lichtreflektoren, wie z.B. Spiegel oder Prismen sind. Weiter kann der Schritt des Visualisierens des Wirkbereichs der Sicherheitsfunktion durch eine farbliche Übereinstimmung des ersten und der zweiten Signalmittel erfolgen. Diese Visualisierung ist eine kostengünstige Möglichkeit dem Anlagenbetreiber durch eine rein visuelle Wahrnehmung die Automationsanlagenkomponenten zu identifizieren, welche aktuell durch die Sicherheitsfunktion des Sicherheitseingabemittels beeinflusst werden.

In einer weiteren vorteilhaften Ausführung der vorliegenden Erfindung kann bei dem Verfahren die Visualisierung durch die Anzeigevorrichtung in Abhängigkeit von der vorgegebenen Sicherheitskonfiguration der Sicherheitssteuerung aktualisiert werden, wenn die Automationsanlagenkomponente mit der Sicherheitssteuerung verbunden oder von der Sicherheitssteuerung getrennt wird. Die Sicherheitssteuerung kann in einer besonders bevorzugten Ausführungsform der Erfindung die Aktivierung bzw. Deaktivierung ihrer Signaleingänge und Signalausgänge überwachen und ein Signal zur Aktualisierung der Anzeigevorrichtung erzeugen, insbesondere wenn die Datenverbindung zu einzelnen Automationsanlagenkomponenten aufgebaut wird oder wenn diese abbricht.

Die Aktivierung bzw. Deaktivierung kann aktiv durch physisches Verbinden der einzelnen Komponenten der Automationsanlage mit der Sicherheitssteuerung erfolgen. So kann dabei eine kabelgebundene oder auch drahtlose Kommunikation zwischen der Komponente und der Sicherheitssteuerung etabliert werden. In einer anderen, ergänzenden Alternative kann diese Verbindung bereits bestehen und im Ablaufprogramm der Automationsanlage wird automatisch, zeit- oder prozessabhängig eine Aktivierung bzw. Deaktivierung der Datenverbindung vorgenommen. Dies kann durch das digitale Schalten eines Signalein- bzw. Signalausgangs in der Automationsanlagenkomponente oder einer zwischen der Automationsanlagenkomponente und der Sicherheitssteuerung zwischengeschalteten Programmablaufsteuerung oder Anlagensteuerung stattfinden.

Bei Herstellen oder Trennen der Verbindung ändert dann die Sicherheitssteuerung in Abhängigkeit von der vorgegebenen Sicherheitskonfiguration der Sicherheitssteuerung den Zustand der Anzeigevorrichtung. Im Beispiel des Bildschirms kann sich die graphische Darstellung, also das angezeigte Bild derart ändern, dass dadurch der Wirkbereich der Sicherheitsfunktion präzise dargestellt wird. Wenn nun eine neue Automationsanlagenkomponente zur bestehenden Automationsanlagenkomponente hinzugefügt wird und diese gemäß der vorgegebenen Sicherheitskonfiguration Teil des Wirkbereichs ist, wird ein neues Bild auf dem Bildschirm dargestellt, das neben der bereits angezeigten Automationsanlagenkomponente die neue Automationsanlagenkomponente zeigt. Am Beispiel der Signalmittel kann die Sicherheitssteuerung mit gleichem Ziel, den Wirkbereich der Sicherheitsfunktion präzise darzustellen, die Farbe des Signalmittels an der neuen Automationsanlagenkomponente derart einstellen, dass diese nun mit der Farbe des Signalmittels an dem Sicherheitseingabemittel übereinstimmt, um die Zugehörigkeit zum Wirkbereich der Sicherheitsfunktion zu visualisieren.

Zeigt die Anzeigevorrichtung des Sicherheitseingabemittels beispielsweise aktuell kein Bild an, bzw. leuchten die Leuchtmittel des Sicherheitseingabemittels nicht, signalisiert es dem Anlagenbetreiber weiter, dass dieses Sicherheitseingabemittel gerade keine Sicherheitsfunktion hat. Bei einem farblich markierten Sicherheitseingabemittel, zu dem keine farbliche Übereinstimmung mit den Signalmitteln einer vorhandenen Automationsanlagenkomponente besteht, wird dem Anlagenbetreiber damit signalisiert, dass dieses Sicherheitseingabemittel keine geeignete Sicherheitsfunktion bzgl. der vorhandenen Automationsanlagenkomponente auslösen kann. Gleiches gilt wenn der Bildschirm des Sicherheitseingabemittels ein anderes Bild als das von der vorhandenen Automationsanlagenkomponente anzeigt. Nur wenn eine farbliche Übereinstimmung der Signalmittel des Sicherheitseingabemittels und der Signalmittel in den betroffenen Automationsanlagenkomponenten besteht, bzw. nur wenn die Automationsanlagenkomponenten, die der Anlagenbetreiber beeinflussen möchte auf dem Bildschirm des Sicherheitseingabemittels angezeigt werden, dann kann der Anlagenbetreiber in sicherer Weise die Anlage beeinflussen, z.B. stillsetzen.

Weitere Vorteile, Merkmale und Einzelheiten der Erfindung ergeben sich aus den nachfolgenden Ausführungsbeispielen und den Figuren.

Hierzu zeigt, teilweise schematisiert:
- Fig. 1:: Sicherheitssteuerungssystem mit Bildschirm;
- Fig. 2:: Sicherheitssteuerungssystem mit aktiven zweiten Signalmitteln;
- Fig. 3:: Sicherheitssteuerungssystem mit passiven zweiten Signalmitteln;
- Fig. 4:: Darstellung der Verfahrensschritte;

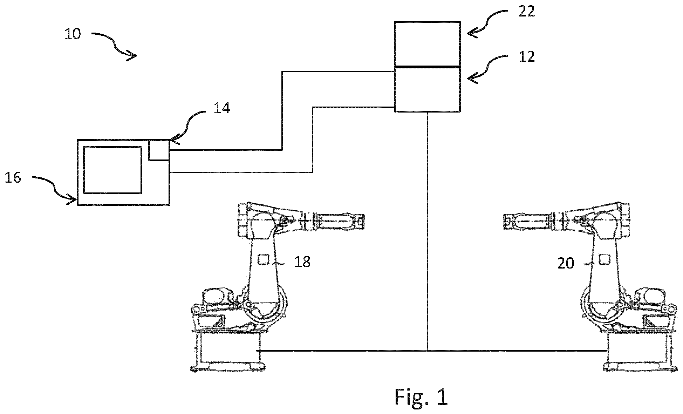

Fig. 1 zeigt eine schematische Darstellung eines nicht erfindungsgemäßen Sicherheitssteuerungssystems (10). Das Sicherheitssteuerungssystem (10) umfasst dabei eine Sicherheitssteuerung (12), ein Sicherheitseingabemittel (14), das als Sicherheitstaster ausgebildet sein kann, sowie eine Anzeigevorrichtung (16), die als ein Bildschirm ausgebildet sein kann.

Der Bildschirm (16) ist dabei für den Anlagenbetreiber gut sichtbar, insbesondere an der Oberseite im Gehäuse des Sicherheitstasters (14) integriert. In einer weiteren, nicht dargestellten Variante dieser Ausführungsform sind der Sicherheitstaster (14) und der Bildschirm (16) integrale Bestandteile eines Eingabegerätes der Automationsanlage. Mittels eines solchen Eingabegeräts werden in der Regel während der Inbetriebnahme ein oder mehrere Automationsanlagenkomponenten (18, 20) kommandiert, um ein Anlagenprogramm zu erstellen. Während des automatischen Betriebs einer Automationsanlagenkomponente (18, 20) dient der Bildschirm (16) dieses Automationsanlageneingabegerätes als Statusanzeige des aktuellen Programmablaufs.

Die Sicherheitssteuerung (12) kann insbesondere Bestandteil einer Automationsanlagensteuerung (22) sein, durch welche zumindest teilweise die Steuerung der Automationsanlage erfolgt. In der Sicherheitssteuerung (12) wird durch den Anlagenbetreiber bzw. Inbetriebnehmer hinterlegt, welche der Automationsanlagenkomponenten zu einem bestimmten Zeitpunkt im Programmablauf in einem Wirkbereich einer Sicherheitsfunktion liegen bzw. von dieser beeinflusst werden. Ergänzend oder alternativ dazu kann die Sicherheitssteuerung (12) als zentrale Sicherheitssteuerung fungieren und mit den einzelnen lokalen Sicherheitssteuerungen der einzelnen Automationsanlagenkomponente (18, 20) zusammenwirken, wenn die entsprechende Automationsanlagenkomponente (18, 20) mit einer zentralen Sicherheitssteuerung (12) verbunden ist. Dabei wird die Konfiguration der lokalen Sicherheitssteuerung in die Sicherheitskonfiguration der zentralen Sicherheitssteuerung (12) integriert oder durch diese berücksichtigt.

Die Automationsanlagenkomponenten (18, 20) können insbesondere Manipulatoren, besonders bevorzugt Roboter, sein, die entweder alleine oder zumindest temporär in einem Verbund miteinander kooperieren können. Ein solcher Manipulatorverbund wird hier am Beispiel dreier miteinander kooperierender Roboter R₁, R₂ und R₃ dargestellt. Roboter R₂ kooperiert dabei abwechselnd mit R₁ oder R₃ und wird mit diesen koordiniert bewegt, um eine entsprechende automatisierte Aufgabe auszuführen, z.B. das abwechselnde Bearbeiten eines durch den Roboter R₂ gehaltenen Bauteils. Sobald Roboter R₂ innerhalb eines Applikationsschrittes mit dem Roboter R₁ zusammen die Bearbeitung des Bauteils unternimmt, bilden diese den Roboterverbund (R₁ + R₂). Während dieser Zeit kann der Wirkbereich einer Sicherheitsfunktion der Sicherheitssteuerung (12) den Roboterverbund (R₁ + R₂) umfassen. In einem nächsten Applikationsschritt kooperiert der Roboter R₂ beispielsweise zur weiteren Bearbeitung des Bauteils mit dem Roboter R₃. In diesem Applikationsschritt kann der Wirkbereich einer Sicherheitsfunktion der Sicherheitssteuerung (12) den Roboterverbund (R₂ + R₃) umfassen.

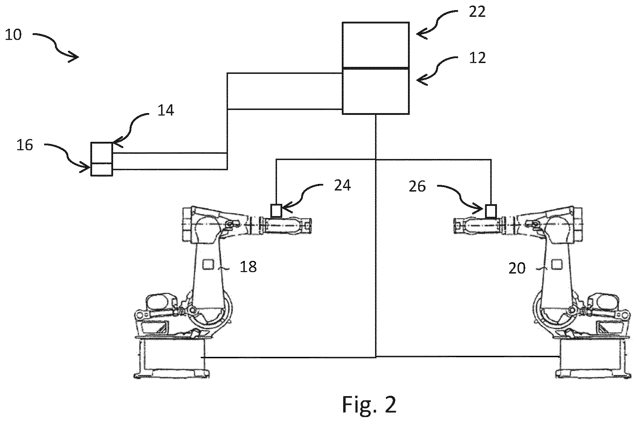

Fig. 2 zeigt in einer schematischen Darstellung ein erfindungsgemäßes Sicherheitssteuerungssystem (10), wobei in dieser Ausführungsform die Anzeigevorrichtung (16) von einem Signalmittel (16), insbesondere einem farbveränderlichen LED-Leuchtring (16) am Gehäuse des Sicherheitseingabemittels (14) gebildet wird.

Im Weiteren sind in dieser Ausführungsform an den Automationsanlagenkomponenten (18, 20) jeweils weitere farbveränderliche zweite Signalmittel (24, 26), insbesondere farbveränderliche, leuchtaktive LED-Signalleuchten (24, 26) angebracht.

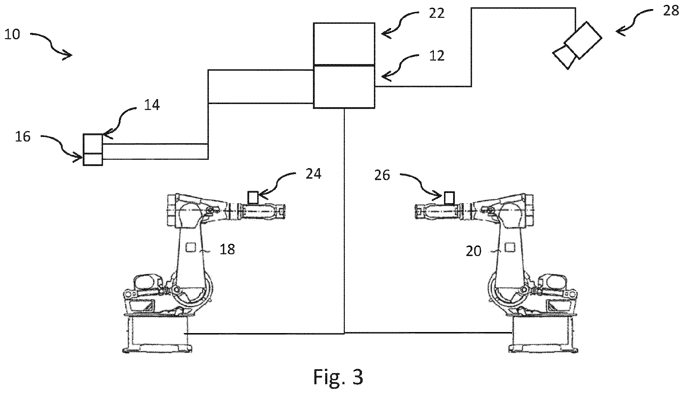

Fig. 3 zeigt in einer schematischen Darstellung ein Sicherheitssteuerungssystem (10), wobei die zweiten Signalmittel (24, 26) passive Lichtreflektoren (24, 26) sind, und an geeigneter Stelle in der Automationsanlage ein Lichtprojektor (28) vorgesehen ist, der die passive Lichtreflektoren (24, 26) mit Licht bestrahlen kann.

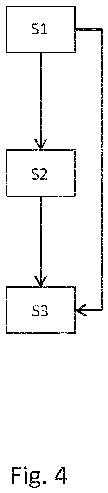

Fig. 4 zeigt den schrittweisen Ablauf des erfindungsgemäßen Verfahrens zu allen oben genannten Ausführungsformen.

In einem ersten Schritt (S1) ermittelt die Sicherheitssteuerung (12) eine erste mit ihr verbundene Automationsanlagenkomponente (18). Dies geschieht durch den Datenaustausch der Sicherheitssteuerung (12) mit den einzelnen Automationsanlagenkomponenten (18) oder mit der Automationsanlagensteuerung (22), die Kenntnis über den Status der einzelnen Automationsanlagenkomponenten (18) hat.

Basierend auf dem Ergebnis dieser Ermittlung und in Abhängigkeit von der vorgegebenen Sicherheitskonfiguration der Sicherheitssteuerung (12) kann die Sicherheitssteuerung (12) nun den Wirkbereich der Sicherheitsfunktion durch die graphische Darstellung der Automationsanlagenkomponente (18) als Bild oder graphisches Modell auf dem Bildschirm (16) visualisieren.

Gemäß dem Ausführungsbeispiel der Erfindung visualisiert die Sicherheitssteuerung (12) den Wirkbereich der Sicherheitsfunktion durch die gleichzeitige Aktivierung des LED-Leuchtrings (16) am Gehäuse des Sicherheitseingabemittels (14) und der LED-Signalleuchte (24) der Automationsanlagenkomponente (18). Gemäß dem dritten Ausführungsbeispiel der Erfindung erfolgt gleichzeitig zur Aktivierung des LED-Leuchtrings (16) am Gehäuse des Sicherheitseingabemittels (14) die Beleuchtung des Lichtreflektors (24) der Automationsanlagenkomponente (18) durch den Lichtprojektor (28) in einer zum LED-Leuchtring (16) identischen Farbe.

Wird in einem zweiten Schritt (S2) eine weitere Automationsanlagenkomponente (20) aktiv durch den Anlagenbetreiber oder Inbetriebnehmer oder automatisch durch die Automationsanlagensteuerung (22) mit der Sicherheitssteuerung (12) verbunden, so aktualisiert die Sicherheitssteuerung (12) die Visualisierung des aktuellen Wirkbereichs auf dem Bildschirm (16) derart, dass zusätzlich zum Bild der bestehenden Automationsanlagenkomponente (18) das Bild der weiteren Automationsanlagenkomponente (20) angezeigt wird. Somit wird dem Anlagenbetreiber symbolisiert, dass die Sicherheitsfunktion des Sicherheitseingabemittels (14) nun auf den Verbund der Automationsanlagenkomponenten (18, 20) wirkt.

Gemäß dem Ausführungsbeispiel der Erfindung aktualisiert die Sicherheitssteuerung (12) die Visualisierung des aktuellen Wirkbereichs dadurch, dass die LED-Signalleuchte (26) der Automationsanlagenkomponente (20) mit der identischen Farbe des LED-Leuchtrings (16) am Gehäuse des Sicherheitseingabemittels (14) und der LED-Signalleuchte (24) der bisherigen Automationsanlagenkomponente (18) aktiviert wird. Der Lichtreflektor (26) mit der identischen Farbe des LED-Leuchtrings (16) am Gehäuse des Sicherheitseingabemittels (14) und des Lichtreflektors (24) der bisherigen Automationsanlagenkomponente (18) wird durch den Lichtprojektors (28) beleuchtet.

Wird in einem dritten Schritt (S3), der zum vorherigen zweiten Schritt alternativ oder ergänzend sein kann, die Automationsanlagenkomponente (18, 20) aktiv durch den Anlagenbetreiber oder Inbetriebnehmer oder automatisch durch die Automationsanlagensteuerung (22), von der Sicherheitssteuerung (12) getrennt, so aktualisiert die Sicherheitssteuerung (12) in dem ersten Ausführungsbeispiel die Visualisierung des aktuellen Wirkbereichs auf dem Bildschirm (16) derart, dass dort das Bild dieser Automationsanlagenkomponente (18, 20) entfernt wird. Somit wird dem Anlagenbetreiber ersichtlich, dass die Sicherheitsfunktion des Sicherheitseingabemittels (14) nicht mehr auf die Automationsanlagenkomponente (18, 20) wirkt.

Die Sicherheitssteuerung (12) aktualisiert die Visualisierung des aktuellen Wirkbereichs durch Abschalten des LED-Leuchtrings (16) und der LED-Signalleuchte (24), bzw. durch Abschalten der Beleuchtung des Lichtreflektors (24) durch den Lichtprojektor (28).

### Bezugszeichenliste

- 10: Sicherheitssteuerungssystem
- 12: Sicherheitssteuerung
- 14: Sicherheitseingabemittel
- 16: Anzeigevorrichtung
- 18, 20: Automationsanlagenkomponenten
- 22: Automationsanlagensteuerung
- 24, 26: zweite Signalmittel
- 28: Lichtprojektor
- S1: erster Verfahrensschritt
- S2: zweiter Verfahrensschritt
- S3: dritter Verfahrensschritt

## Patentansprüche

1. Sicherheitssteuerungssystem (10) zum Ausführen einer Sicherheitsfunktion für zumindest eine Automationsanlagenkomponente (18,20), wobei das Sicherheitssteuerungssystem (10) eine Sicherheitssteuerung (12) und ein oder mehrere Sicherheitseingabemittel (14) aufweist, und wobei das Ausführen der Sicherheitsfunktion durch Betätigung eines der Sicherheitseingabemittel (14) ausgelöst wird wobei an jedem Sicherheitseingabemittel (14) eine Anzeigevorrichtung (16) angeordnet ist, wobei die Anzeigevorrichtung (16) dazu eingerichtet ist einen Wirkbereich der Sicherheitsfunktion in Abhängigkeit von einer vorgegebenen Sicherheitskonfiguration der Sicherheitssteuerung (12) zu visualisieren, wenn die Automationsanlagenkomponente (18,20) mit der Sicherheitssteuerung (12) verbunden ist wobei die Anzeigevorrichtung (16) ein farblich veränderbares erstes Signalmittel ist und **dadurch gekennzeichnet, dass** der Automationsanlagenkomponente (18,20) ein oder mehrere farblich veränderbare zweite Signalmittel (24,26) zugeordnet sind und dass das erste und das ein oder mehrere zweite Signalmittel (24,26) den Wirkbereich der Sicherheitsfunktion dadurch visualisieren, dass das erste Signalmittel und das ein oder mehrere zweite Signalmittel farblich übereinstimmen.

2. Sicherheitssteuerungssystem (10) nach Anspruch 1,
**dadurch gekennzeichnet, dass** die Sicherheitssteuerung (12) als zentrale Sicherheitssteuerung fungiert und die Automationsanlagenkomponente eine lokale Sicherheitssteuerung umfasst, wobei die zentrale Sicherheitssteuerung mit der lokalen Sicherheitssteuerung der Automationsanlagenkomponenten verbunden ist.

3. Verfahren zum Ausführen einer Sicherheitsfunktion für zumindest eine Automati onsanlagenkomponente (18,20) mittels einer Sicherheitssteuerung (12) und ein oder mehrere Sicherheitseingabemittel (14), wobei das Ausführen der Sicherheitsfunktion durch Betätigung eines der Sicherheitseingabemittel (14) ausgelöst wird, und an dem Sicherheitseingabemittel (14) eine Anzeigevorrichtung (16) angeordnet ist, **aufweisend die Schritte**
- Vorgeben einer Sicherheitskonfiguration für die Sicherheitssteuerung (12)
- Ermitteln der Automationsanlagenkomponente (18,20), die mit der Sicherheitssteuerung (12) verbunden ist;
- Visualisieren des Wirkbereichs der Sicherheitsfunktion auf der oder durch die Anzeigevorrichtung (16) in Abhängigkeit von der vorgegebenen Sicherheitskonfiguration wobei die Anzeigevorrichtung (16) ein farblich veränderbares erstes Signalmittel ist, **dadurch gekennzeichnet dass** der Automationsanlagenkomponente (18,20) ein oder mehrere farblich veränderbare zweite Signalmittel (24,26) zugeordnet sind, und dass das Visualisieren des Wirkbereichs der Sicherheitsfunktion durch eine farbliche Übereinstimmung des ersten und der zweiten Signalmittel erfolgt.

4. Verfahren zum Ausführen einer Sicherheitsfunktion nach Anspruch 3 weiter **gekennzeichnet durch** die Schritte
- Aktualisieren der Visualisierung durch die Anzeigevorrichtung (16) in Abhängigkeit von der vorgegebenen Sicherheitskonfiguration, wenn die Automationsanlagenkomponente (18,20) mit der Sicherheitssteuerung (12) verbunden oder von der Sicherheitssteuerung (12) getrennt wird.

## Claims

1. Safety control system (10) for performing a safety function for at least one automation installation component (18, 20), wherein the safety control system (10) has a safety controller (12) and one or more safety input means (14), and wherein the performance of the safety function is triggered by actuating one of the safety input means (14), wherein a display apparatus (16) is arranged on each safety input means (14), wherein the display apparatus (16) is configured to visualize an effective range of the safety function on the basis of a specified safety configuration of the safety controller (12) when the automation installation component (18, 20) is connected to the safety controller (12), wherein the display apparatus (16) is a first signal means whose colour can be changed, and **characterized in that** the automation installation component (18, 20) is assigned one or more second signal means (24, 26) whose colour can be changed, and **in that** the first signal means and the one or more second signal means (24, 26) visualize the effective range of the safety function by virtue of the colour of the first signal means and of the one or more second signal means matching.

2. Safety control system (10) according to Claim 1, **characterized in that** the safety controller (12) acts as a central safety controller and the automation installation component comprises a local safety controller, wherein the central safety controller is connected to the local safety controller of the automation installation components.

3. Method for performing a safety function for at least one automation installation component (18, 20) by means of a safety controller (12) and one or more safety input means (14), wherein the performance of the safety function is triggered by actuating one of the safety input means (14), and a display apparatus (16) is arranged on the safety input means (14), **having the steps of**
- specifying a safety configuration for the safety controller (12)
- determining the automation installation component (18, 20) which is connected to the safety controller (12) ;
- visualizing the effective range of the safety function on or by means of the display apparatus (16) on the basis of the specified safety configuration, wherein the display apparatus (16) is a first signal means whose colour can be changed, **characterized in that** the automation installation component (18, 20) is assigned one or more second signal means (24, 26) whose colour can be changed, and **in that** the effective range of the safety function is visualized by means of a colour match of the first and second signal means.

4. Method for performing a safety function according to Claim 3, also **characterized by the steps of**
- updating the visualization by the display apparatus (16) on the basis of the specified safety configuration when the automation installation component (18, 20) is connected to the safety controller (12) or is disconnected from the safety controller (12).

## Revendications

1. Système de commande de sécurité (10) permettant d'exécuter une fonction de sécurité pour au moins un composant d'installation d'automatisation (18, 20), dans lequel le système de commande de sécurité (10) présente une commande de sécurité (12) et un ou plusieurs moyens d'entrée de sécurité (14), et dans lequel l'exécution de la fonction de sécurité est déclenchée par l'actionnement d'un des moyens d'entrée de sécurité (14), dans lequel un dispositif d'affichage (16) est disposé au niveau de chaque moyen d'entrée de sécurité (14), dans lequel le dispositif d'affichage (16) est conçu pour visualiser une zone active de la fonction de sécurité en fonction d'une configuration de sécurité prédéfinie de la commande de sécurité (12) lorsque le composant d'installation d'automatisation (18, 20) est connecté à la commande de sécurité (12), dans lequel le dispositif d'affichage (16) est un premier moyen de signalisation de couleur variable, et
**caractérisé en ce qu'**un ou plusieurs deuxièmes moyens de signalisation (24, 26) de couleur variable sont associés au composant d'installation d'automatisation (18, 20), et **en ce que** le premier et ledit un ou les plusieurs deuxièmes moyens de signalisation (24, 26) visualisent la zone active de la fonction de sécurité **en ce que** le premier moyen de signalisation et ledit un ou les plusieurs deuxièmes moyens de signalisation coïncident au niveau des couleurs.

2. Système de commande de sécurité (10) selon la revendication 1, **caractérisé en ce que** la commande de sécurité (12) sert de commande de sécurité centrale, et le composant d'installation d'automatisation comprend une commande de sécurité locale, dans lequel la commande de sécurité centrale est connectée à la commande de sécurité locale des composants d'installation d'automatisation.

3. Procédé permettant d'exécuter une fonction de sécurité pour au moins un composant d'installation d'automatisation (18, 20) au moyen d'une commande de sécurité (12) et d'un ou de plusieurs moyens d'entrée de sécurité (14), dans lequel l'exécution de la fonction de sécurité est déclenchée par l'actionnement d'un des moyens d'entrée de sécurité (14), et un dispositif d'affichage (16) est disposé au niveau du moyen d'entrée de sécurité (14), présentant les étapes consistant à
- prédéfinir une configuration de sécurité pour la commande de sécurité (12),
- déterminer le composant d'installation d'automatisation (18, 20) qui est connecté à la commande de sécurité (12) ;
- visualiser la zone active de la fonction de sécurité sur ou par le dispositif d'affichage (16) en fonction de la configuration de sécurité prédéfinie, dans lequel le dispositif d'affichage (16) est un premier moyen de signalisation de couleur variable,
**caractérisé en ce qu'**un ou plusieurs deuxièmes moyens de signalisation (24, 26) de couleur variable sont associés au composant d'installation d'automatisation (18, 20), et **en ce que** la visualisation de la zone active de la fonction de sécurité est effectuée par une coïncidence des couleurs des premiers et des deuxièmes moyens de signalisation.

4. Procédé permettant d'exécuter une fonction de sécurité selon la revendication 3, **caractérisé en outre par** l'étape consistant à
- mettre à jour la visualisation par le dispositif d'affichage (16) en fonction de la configuration de sécurité spécifiée si le composant d'installation d'automatisation (18, 20) est connecté à la commande de sécurité (12) ou est déconnecté de la commande de sécurité (12).
